# EUROPÄISCHE PATENTSCHRIFT

(11) **EP 2 428 415 B1**
(45) Veröffentlichungstag und Bekanntmachung des Hinweises auf die Patenterteilung: **25.06.2014**
(21) Anmeldenummer: 10176173.2
(22) Anmeldetag: 10.09.2010
(51) Int. Cl.: B60S 3/06

(54) **Verfahren und Vorrichtung zum Waschen eines Fahrzeugs**
Method and device for washing an automobile
Procédé et dispositif destinés au nettoyage d'un véhicule

(43) Veröffentlichungstag der Anmeldung: 14.03.2012
(73) Patentinhaber: Alfred Kärcher GmbH & Co. KG, 71364 Winnenden (DE)
(72) Erfinder: Speckmaier, Andre, 71543, Wüstenrot (DE); Heid, Claus, 70186, Stuttgart (DE); Fischer, Rainer, 75417, Mühlacker (DE); Mettang, Bruno, 71397, Leutenbach (DE)
(74) Vertreter: Hoeger, Stellrecht & Partner Patentanwälte

(56) Entgegenhaltungen:
- EP-A2- 0 283 446
- JP-A- 9 175 345
- JP-A- 10 001 032
- JP-A- 11 342 835

## Beschreibung

Die Erfindung betrifft ein Verfahren zum Waschen eines Fahrzeugs mit Hilfe einer Fahrzeugwaschanlage, wobei mindestens ein Waschwerkzeug in Abhängigkeit von der Kontur des Fahrzeugs entlang des Fahrzeugs bewegt wird.

Außerdem betrifft die Erfindung eine Fahrzeugwaschanlage zur Durchführung des Verfahrens mit mindestens einem Waschwerkzeug, das in Abhängigkeit von der Kontur des Fahrzeugs entlang des Fahrzeugs bewegbar ist.

Fahrzeugwaschanlagen sind bekannt in Form von Waschstraßen und Portalwaschanlagen. In Waschstraßen durchfährt das Fahrzeug verschiedene Waschstationen mit Waschwerkzeugen, die an die Oberfläche des Fahrzeugs herangeführt werden können. Als Waschwerkzeuge kommen beispielsweise rotierende Waschbürsten zum Einsatz oder auch Düsenbalken mit mehreren Düsen, mit deren Hilfe die zu reinigende Fläche mit einem Reinigungsmittelstrahl beaufschlagt werden kann. Bei Portalwaschanlagen kommt ein in einer Vorschubrichtung entlang des Fahrzeuges bewegtes Portal zum Einsatz, an dem mindestens ein Waschwerkzeug gehalten ist. Das Waschwerkzeug kann in Abhängigkeit von der Kontur des Fahrzeuges an diesem entlang bewegt werden.

Die Kontur eines Fahrzeuges kann vor oder während eines Waschvorganges mit Hilfe geeigneter Sensoren erfasst werden, beispielsweise mit Hilfe einer Lichtschranke. Eine derartige Fahrzeugwaschanlage ist aus EP 0 283 446 A2 bekannt. Bei einer senkrecht zur Vorschubrichtung verstellbaren Waschbürste kann der Motorstrom des Elektromotors der Waschbürste erfasst werden. Der Motorstrom weist bei einem für die Reinigung des Fahrzeuges optimalen Abstand zum Fahrzeug einen vorgegebenen Wert auf. Trifft die Waschbürste auf ein Hindernis, bei Fahrzeugen beispielsweise auf einen von der Fahrzeugoberfläche abstehenden Spiegel, so führt dies zu einer Erhöhung des Motorstroms. Diese Erhöhung kann von einem Stromsensor detektiert werden, dessen Sensorsignal zu einer Steuervorrichtung geleitet wird, mit deren Hilfe die Waschbürste senkrecht zur Vorschubrichtung bewegt werden kann. Im Falle eines Hindernisses wird die Waschbürste in einen größeren Abstand zum Fahrzeug bewegt, so dass der Motorstrom wieder seinen ursprünglichen Wert annimmt und das Hindernis umfahren wird. Die Kontur des Fahrzeuges kann in Form der Position der Waschbürste erfasst werden, die diese relativ zu einer vorgegebenen Bezugsebene bei vorgegebenem Motorstrom einnimmt

Das Bewegen eines Waschwerkzeuges in Abhängigkeit von der Kontur des zu reinigenden Fahrzeugs hat sich insbesondere bei der Reinigung von Personenkraftwagen bewährt. Es können sich allerdings Schwierigkeiten ergeben, wenn die Kontur des Fahrzeugs Vorsprünge oder Hinterschnitte aufweist, die häufig nur sehr schwer oder gar nicht erfasst werden können. Diese Schwierigkeiten ergeben sich beispielsweise bei Nutzfahrzeugen mit An- oder Aufbauten, deren Kontur von den Sensoren oft nicht vollständig erfasst werden kann.

Aus JP-A-11342835 ist eine Fahrzeugwaschanlage bekannt, bei der ansonsten konturabhängig gesteuerte Waschbürsten in einzelnen Bereichen des Fahrzeugs manuell gesteuert werden.

Aufgabe der vorliegenden Erfindung ist es, ein Verfahren zum Waschen eines Fahrzeugs der eingangs genannten Art sowie eine Fahrzeugwaschanlage zur Durchführung des Verfahrens bereitzustellen, die eine wirksame Reinigung von Fahrzeugen auch dann erlaubt, wenn diese eine komplizierte Kontur aufweisen.

Diese Aufgabe wird bei einem Verfahren der gattungsgemäßen Art erfindungsgemäß dadurch gelöst, dass man zumindest ein Waschwerkzeug während eines Referenzlaufes entlang des Fahrzeugs bewegt, wobei die Bewegung des Waschwerkzeuges zumindest entlang eines Teilbereichs des Fahrzeugs manuell gesteuert wird, und dass man die Kontur zumindest des Fahrzeugsbereichs, in dem die Steuerung der Bewegung des Waschwerkzeuges manuell erfolgt, in Form von Konturdaten auf einem Speichermedium speichert, und dass man bei einem späteren Waschvorgang die gespeicherten Konturdaten zur Steuerung derselben oder einer baugleichen Fahrzeugwaschanlage, insbesondere zur Steuerung der Bewegung des Waschwerkzeuges heranzieht.

Beim erfindungsgemäßen Verfahren wird zumindest ein Waschwerkzeug in Abhängigkeit von der Kontur des zu waschenden Fahrzeugs entlang des Fahr-zeugs bewegt. Während eines Referenzlaufes wird die Bewegung des Waschwerkzeuges zumindest entlang eines Teilbereichs des Fahrzeugs manuell gesteuert. Geeignete Steuerbefehle kann der Benutzer manuell in ein Eingabegerät der Fahrzeugwaschanlage eingeben. Dadurch können beispielsweise Überhänge, An- oder Aufbauten des zu reinigenden Fahrzeugs von dem Waschwerkzeug umfahren werden. Bei manueller Steuerung des Waschwerkzeuges kann die Kontur in Form der Position des Waschwerkzeuges relativ zu einer Bezugsebene in Abhängigkeit vom Vorschub des Waschwerkzeuges erfasst werden. Ansonsten kann die Konturerfassung weitgehend selbsttätig mittels Sensoren erfolgen, wie dies aus dem Stand der Technik bekannt ist, beispielsweise durch eine Erfassung des Motorstroms des Elektromotors des Waschwerkzeuges und der Position des Waschwerkzeuges relativ zu einer Bezugsebene.

Zumindest die Kontur derjenigen Fahrzeugsbereiche, in denen der Benutzer das Waschwerkzeug manuell steuert, wird gespeichert. Für Bereiche des Fahrzeugs, in denen die Kontur des Fahrzeugs mittels Sensoren auf einfache Weise erfasst werden kann, ist eine Speicherung der Kontur nicht unbedingt erforderlich, da sie bei jedem Waschvorgang ohne Weiteres erneut erfasst und zur Steuerung der Fahrzeugwaschanlage, insbesondere des Waschwerkzeuges herangezogen werden kann. Für Bereiche des Fahrzeugs, in denen die Kontur nur schwer und damit zeitaufwändig oder aber gar nicht selbsttätig von Sensoren erfasst werden kann und deshalb die Steuerung des Waschwerkzeugs manuell erfolgt, wird die Kontur auf dem Speichermedium gespeichert und für spätere Waschvorgänge an derselben Fahrzeugwaschanlage oder einer baugleichen Fahrzeugwaschanlage wieder herangezogen.

Das Speichern der Kontur zumindest derjenigen Fahrzeugsbereiche, entlang derer die Steuerung des Waschwerkzeuges manuell erfolgt, hat den Vorteil, dass die manuelle Steuerung lediglich bei einem einzigen Referenzlauf zu erfolgen hat. Bei anschließenden Waschvorgängen kann dann die gespeicherte Kontur zur Steuerung verwendet werden.

Die Speicherung der Kontur kann dauerhaft erfolgen, so dass auch Waschvorgänge, die in größeren zeitlichen Abständen erfolgen, unter Heranziehung der gespeicherten Kontur durchgeführt werden können.

Es wird beim erfindungsgemäßen Verfahren zumindest die Kontur derjenigen Fahrzeugsbereiche gespeichert, entlang derer die Bewegung des Waschwerkzeuges während des Referenzlaufes manuell gesteuert wird. Von besonderem Vorteil ist es jedoch, wenn die Kontur des gesamten Fahrzeugs auf dem Speichermedium gespeichert und zur Steuerung derselben oder einer baugleichen Fahrzeugwaschanlage während späterer Waschvorgänge herangezogen wird. Die Erfassung der kompletten Kontur hat somit lediglich ein einziges Mal zu erfolgen. Dies hat den Vorteil, dass spätere Waschvorgänge innerhalb kürzerer Zeit durchgeführt werden können.

Die auf dem Speichermedium gespeicherten Konturdaten werden für beliebige Waschvorgänge an Fahrzeugen mit der gespeicherten Kontur zur Verfügung gestellt. Beispielsweise Fahrzeuge mit Sonderaufbauten, deren Kontur nur sehr schwer erfasst werden kann, können dadurch innerhalb kürzerer Zeit gereinigt werden. Außerdem besteht die Möglichkeit, durch die bei späteren Waschvorgängen bereits vorliegenden Konturdaten den Einsatz der Waschwerkzeuge gezielt an die Kontur anzupassen mit dem Ziel, das Fahrzeug innerhalb kurzer Zeit mit möglichst geringem Energieeinsatz umfassend zu reinigen.

Es kann vorgesehen sein, dass man während des Referenzlaufes die Bewegung von mindestens einem Waschwerkzeug entlang des gesamten Fahrzeugs manuell steuert und hierbei die Kontur des Fahrzeugs erfasst. Diese Vorgehensweise empfiehlt sich insbesondere dann, wenn das Fahrzeug über seine gesamte Länge eine nur schwer automatisch erfassbare Kontur aufweist.

In vielen Fällen reicht es jedoch aus, wenn man während des Referenzlaufes die Bewegung des Waschwerkzeuges nur in einem Teilbereich des Fahrzeugs manuell steuert, wohingegen die Bewegung des Waschwerkzeuges entlang der restlichen Fahrzeugsbereiche sensorgesteuert erfolgt. Beispielsweise kann die Bewegung einer rotierenden Dachbürste oder eines horizontalen Düsenbalkens mit einer Vielzahl von Düsen im Bereich der Motorhaube des Fahrzeuges und/oder entlang des Daches und/oder entlang des Fahrzeugshecks automatisch anhand von Sensordaten erfolgen, wohingegen die Bewegung der Dachbürste oder des vertikalen Düsenbalkens beispielsweise im Übergangsbereich zwischen der Windschutzscheibe und dem Fahrzeugdach oder auch entlang eines Teilbereiches des Daches, in welchem ein Fahrzeugaufbau mit komplizierter Kontur angeordnet ist, manuell gesteuert wird. Zumindest die Kontur der Fahrzeugbereiche, in denen die Steuerung des Waschwerkzeuges manuell erfolgte, kann dann auf dem Speichermedium gespeichert werden und für nachfolgende Waschvorgänge insbesondere zur Steuerung des Waschwerkzeuges herangezogen werden.

Vorzugsweise speichert man die Konturdaten auf einem tragbaren Speichermedium ab, beispielsweise auf einer Speicherkarte, einem USB-Stick oder auf einem Transponder. Derartige tragbare Speichermedien können mit dem Fahrzeug mitgeführt werden, der gereinigt werden soll. Das tragbare Speichermedium kann bei einem späteren Waschvorgang von einem Datenlesegerät einer Fahrzeugwaschanlage ausgelesen werden, so dass die Konturdaten zur Steuerung beispielsweise der Bewegung der Waschwerkzeuge herangezogen werden können, ohne dass der Benutzer erneut mindestens ein Waschwerkzeug zumindest entlang eines Teilbereiches des Fahrzeugs manuell steuern muss.

Insbesondere kann vorgesehen sein, dass das Speichermedium berührungslos ausgelesen werden kann, beispielsweise über eine Funkverbindung. Dies gibt zum Beispiel die Möglichkeit, als Speichermedium ein sogenanntes RFID-Tag (Radio Frequency Identification-Tag) zu verwenden. Dadurch kann das berührungsbehaftete Auslesen des Speichermediums entfallen. Dies wiederum vereinfacht den Waschvorgang.

Bei einer bevorzugten Ausgestaltung der Erfindung ordnet man die gespeicherten Konturdaten mittels eines Identifikationscodes eindeutig dem Fahrzeug mit der gespeicherten Kontur oder einer Klasse von Fahrzeugen mit der gespeicherten Kontur zu. Eine derartige Vorgehensweise empfiehlt sich insbesondere dann, wenn die Konturdaten in einem ortsfesten, insbesondere an der Fahrzeugwaschanlage angeordneten Speichermedium gespeichert werden. Bei einem späteren Waschvorgang kann der Benutzer an einem Eingabegerät der Fahrzeugwaschanlage den Identifikationscode eingeben, der den gespeicherten Konturdaten des zu reinigenden Fahrzeugs oder der Klasse von Fahrzeugen mit der gespeicherten Kontur zugeordnet ist. Anhand des Identifikationscodes können dann die zugeordneten Konturdaten aus dem Speichermedium ausgelesen werden. Das Speichermedium kann beispielsweise ein Festwertspeicher sein, der mit einer Steuervorrichtung der Fahrzeugwaschanlage zusammenwirkt. Die Zuordnung eines Identifikationscodes hat beispielsweise den Vorteil, dass mehrere Fahrzeuge, die in einem bestimmten Teilbereich dieselbe, schwierig zu erfassende Kontur aufweisen, auf einfache Weise innerhalb kurzer Zeit gewaschen werden können. Bei einem dieser Fahrzeuge wird während eines Referenzlaufes zumindest ein Waschwerkzeug im Bereich der schwierig zu erfassenden Kontur manuell gesteuert. Dieser Bereich wird nachfolgend auch als "manueller Steuerungsbereich" bezeichnet. Die Konturdaten des manuellen Steuerungsbereichs werden gespeichert und es wird ihnen ein Identifikationscode zugeordnet. Spätere Waschvorgänge von Fahrzeugen, die in anderen Teilbereichen durchaus andere Konturen aufweisen können, die aber in einem bestimmten Teilbereich dieselbe schwierig zu erfassende Kontur aufweisen, können dann unter Verwendung der dem Identifikationscode zugeordneten Konturdaten gewaschen werden. Dies ermöglicht beispielsweise das Waschen von Fahrzeugen eines Fuhrparks, die alle denselben Dachaufbau aufweisen, dessen Kontur schwierig zu erfassen ist und deshalb unter Zuordnung eines Identifikationscodes gespeichert wird.

Wie erwähnt, erfolgt die Erfassung der Konturdaten während eines Referenzlaufes, bei dem zumindest ein Waschwerkzeug entlang des Fahrzeugs bewegt wird. Der Referenzlauf kann vor einem Waschvorgang durchgeführt werden. Von besonderem Vorteil ist es, wenn man den Referenzlauf während eines Waschvorganges durchführt. Dies verkürzt die für die gesamte Reinigung des Fahrzeugs erforderliche Zeit.

Bei einer besonders bevorzugten Ausführungsform des erfindungsgemäßen Verfahrens speichert man nicht nur die Konturdaten zumindest des manuellen Steuerungsbereichs auf dem Speichermedium ab, sondern es werden auf dem Speichermedium reinigungsspezifische Daten mindestens eines Waschwerkzeuges gespeichert, die bei einem späteren Waschvorgang zur Steuerung einer Fahrzeugwaschanlage herangezogen werden. Die Daten können während des Referenzlaufes oder auch während eines ersten Waschvorganges erfasst und gespeichert werden und stehen dann für spätere Waschvorgänge zur Steuerung zur Verfügung. Dies gibt die Möglichkeit, während des Referenzlaufes und/oder während eines ersten Waschvorganges die Steuerung der Waschwerkzeuge manuell an das zu reinigenden Fahrzeug optimal anzupassen, insbesondere an dessen Kontur. Bei einem späteren Waschvorgang können dann nicht nur die Konturdaten sondern weitere Daten, die den Waschvorgang beeinflussen, aus dem vom Speichermedium ausgelesen und zur Steuerung derselben oder einer baugleichen Fahrzeugwaschanlage herangezogen werden.

Beispielsweise kann während des Referenzlaufes oder auch während eines Waschvorganges der Druck mindestens einer rotierenden Waschbürste, den diese auf den Fahrzeug ausübt, erfasst und gespeichert werden, so dass bei einem nachfolgenden Waschvorgang der gespeicherte Anpressdruck der rotierenden Waschbürste zur Steuerung derselben zur Verfügung steht.

Alternativ oder ergänzend kann beispielsweise die Intensität eines Reinigungsmittelstrahls erfasst werden, der von den Düsen eines Düsenbalkens abgegeben wird, das heißt es kann der Reinigungsmittelverbrauch pro Zeiteinheit erfasst und gespeichert werden. Der gespeicherte Verbrauch kann dann bei einem nachfolgenden Waschvorgang zur Steuerung herangezogen werden. Es kann auch vorgesehen sein, dass der Benutzer einen ersten Waschvorgang individuell gestaltet, indem beispielsweise einzelne Fahrzeugsbereiche von der Reinigung ausgenommen werden, oder indem einzelne Fahrzeugsbereiche oder auch der komplette Fahrzeug mehrmals mit einem bestimmten Waschwerkzeug gereinigt werden. Der Verlauf des Reinigungsprogramms kann auf dem Speichermedium gespeichert werden und steht zur Steuerung derselben oder einer baugleichen Fahrzeugwaschanlage bei einem späteren Waschvorgang zur Verfügung.

Bei einer besonders bevorzugten Ausgestaltung des erfindungsgemäßen Verfahrens erfasst man die Geschwindigkeit, die mindestens ein Waschwerkzeug relativ zum Fahrzeug aufweist, und man speichert die erfasste Geschwindigkeit auf dem Speichermedium und zieht sie bei einem späteren Waschvorgang zur Steuerung insbesondere der Bewegung des Waschwerkzeuges heran. Die Geschwindigkeit des Waschwerkzeuges relativ zum Fahrzeug kann in einzelnen Fahrzeugsbereichen vom Benutzer manuell verlangsamt oder beschleunigt werden. Beispielsweise kann die Geschwindigkeit in besonders stark verschmutzten Bereichen verringert werden oder sie kann in Bereichen mit besonders einfacher Kontur gesteigert werden. Die Geschwindigkeit wird bei einer derartigen Ausführungsform ebenfalls auf dem Speichermedium gespeichert, so dass sie bei einem nachfolgenden Waschvorgang zur Steuerung herangezogen werden kann.

Wie eingangs erwähnt, betrifft die Erfindung auch eine Fahrzeugwaschanlage zur Durchführung des voranstehend genannten Verfahrens. Die eingangs genannte Aufgabe wird bei einer gattungsgemäßen Fahrzeugwaschanlage dadurch gelöst, dass mindestens ein Waschwerkzeug während eines Referenzlaufes entlang des Fahrzeugs bewegbar ist, wobei die Bewegung des Waschwerkzeuges zumindest entlang eines Teilbereiches des Fahrzeugs manuell steuerbar ist, und dass die erfasste Kontur zumindest des Fahrzeugsbereichs, in dem die Steuerung der Bewegung des Waschwerkzeuges manuell erfolgt, in Form von Konturdaten auf einem Speichermedium speicherbar und zur Steuerung der Fahrzeugwaschanlage vor oder während eines späteren Waschvorganges auslesbar ist.

Wie eingangs erwähnt, kann der Referenzlauf vor oder auch während eines Waschvorganges erfolgen. Der Benutzer kann zumindest ein Waschwerkzeug während des Referenzlaufes manuell zumindest entlang eines Teilbereiches des Fahrzeugs steuern. Hierzu kann die Fahrzeugwaschanlage ein Eingabegerät aufweisen, mit dessen Hilfe der Benutzer zur Steuerung des Waschwerkzeuges geeignete Steuerbefehle eingeben kann. Das Eingabegerät kann beispielsweise eine Tastatur umfassen mit mehreren Eingabetasten, durch deren Betätigung die Bewegung von mindestens einem Waschwerkzeug gesteuert werden kann. Alternativ oder ergänzend kann das Eingabegerät beispielsweise auch einen Schwenkhebel nach Art eines Joysticks aufweisen, durch dessen Betätigung die Bewegung von mindestens einem Waschwerkzeug gesteuert werden kann.

Während des Referenzlaufes kann die Kontur des Fahrzeugs erfasst werden. Geeignete Konturerfassungsverfahren wurden voranstehend bereits erläutert und sind dem Fachmann bekannt.

Die Kontur, die das Fahrzeug zumindest im manuellen Steuerbereich aufweist, wird auf einem Speichermedium gespeichert und kann dann zur Steuerung der Fahrzeugwaschanlage bei einem späteren Waschvorgang herangezogen werden. Hierzu werden die Konturdaten aus dem Speichermedium ausgelesen. Die Fahrzeugwaschanlage weist hierzu ein geeignetes Datenauslesegerät auf.

Günstigerweise ist die Kontur des gesamten Fahrzeugs auf dem Speichermedium speicherbar und zur Steuerung der Fahrzeugwaschanlage, insbesondere zur Steuerung der Bewegung des Waschwerkzeuges auslesbar. Eine erneute Konturerfassung kann dadurch bei einem späteren Waschvorgang entfallen.

Von Vorteil ist es, wenn die gespeicherten Konturdaten mittels eines Identifikationscodes eindeutig dem Fahrzeug mit der gespeicherten Kontur oder einer Klasse von Fahrzeugen mit der gespeicherten Kontur zuordnenbar sind. Eine derartige Ausgestaltung ist insbesondere dann von Vorteil, wenn ein zentrales Speichermedium zum Einsatz kommt, beispielsweise in Form einer zentralen Datenbank, die über einen drahtlosen oder drahtgebundenen Kommunikationskanal mit der Fahrzeugwaschanlage verbunden ist. Es kann auch ein ortsfest an der Fahrzeugwaschanlage angeordnetes Speichermedium vorgesehen sein, beispielsweise in Form eines Festwertspeichers einer Steuervorrichtung der Fahrzeugwaschanlage. Möchte der Benutzer später das Fahrzeug, dessen Konturdaten zumindest des manuellen Steuerbereichs bereits gespeichert wurden, oder ein Fahrzeug mit denselben Konturdaten, beispielsweise ein Fahrzeug mit demselben Dachaufbau, erneut reinigen, so kann er durch Eingabe des Identifikationscodes die zugeordneten Konturdaten aus dem Speichermedium abrufen, so dass diese zur Steuerung beispielsweise der Bewegung von mindestens einem Waschwerkzeug herangezogen werden können.

Das Speichermedium ist bei einer vorteilhaften Ausführungsform tragbar. Wie erwähnt, gibt dies die Möglichkeit, das Speichermedium mit dem zu reinigenden Fahrzeug mitzuführen.

Günstigerweise umfasst die Fahrzeugwaschanlage eine Datenauslesevorrichtung zum berührungslosen Auslesen des Speichermediums. Das Auslesen des Speichermediums kann beispielsweise über eine Funkverbindung erfolgen. Dies ist insbesondere dann von Vorteil, wenn das Speichermedium in Form eines RFID-Tags ausgestaltet ist.

Besonders vorteilhaft ist es, wenn die Fahrzeugwaschanlage Sensoren zur Erfassung reinigungsspezifischer Daten von mindestens einem Waschwerkzeug aufweist und die reinigungsspezifischen Daten auf dem Speichermedium speicherbar und zur Steuerung der Fahrzeugwaschanlage für einen späteren Waschvorgang auslesbar sind. Sensoren zur Erfassung reinigungsspezifischer Daten von mindestens einem Waschwerkzeug können beispielsweise den Anpressdruck einer rotierenden Waschbürste erfassen oder auch den Reinigungsmittelverbrauch von Düsen eines Düsenbalkens. Derartige Daten können während eines ersten Waschvorganges selbsttätig erfasst und auf dem Speichermedium gespeichert werden. Bei einem nachfolgenden Waschvorgang können die reinigungsspezifischen Daten dann aus dem Speichermedium ausgelesen und zur Steuerung der Fahrzeugwaschanlage herangezogen werden.

Die erfindungsgemäße Fahrzeugwaschanlage ist bevorzugt als Portalwaschanlage ausgestaltet.

Die nachfolgende Beschreibung einer bevorzugten Ausführungsform der Erfindung dient im Zusammenhang mit der Zeichnung der näheren Erläuterung. Es zeigen:
- Figur 1:: eine schematische Darstellung einer Fahrzeugwaschanlage während eines Referenzlaufes eines Waschwerkzeuges und
- Figur 2:: eine schematische Darstellung der Fahrzeugwaschanlage aus Figur 1 während einer späteren Waschvorganges.

In der Zeichnung ist schematisch eine erfindungsgemäße Fahrzeugwaschanlage 10 dargestellt, mit deren Hilfe ein Fahrzeug 12 gewaschen werden kann. Die Fahrzeugwaschanlage 10 ist in Form einer Portalwaschanlage ausgestaltet und umfasst ein Waschportal 14, das in einer Vorschubrichtung 16 entlang des Fahrzeuges hin und her bewegt werden kann. Am Waschportal 14 sind in üblicher Weise mehrere Waschwerkzeuge angeordnet. Bei der dargestellten Ausführungsform ist ein erstes Waschwerkzeug in Form einer Dachbürste 18 ausgebildet, die mit Hilfe eines Elektromotors 19 um eine horizontale Drehachse 20 drehend antreibbar ist. Außerdem kommen zwei identisch ausgebildete Seitenbürsten 22, 24 zum Einsatz, die von Elektromotoren 23, 25 jeweils um eine vertikal ausgerichtete Drehachse 26 bzw. 28 drehend antreibbar sind.

Zur Steuerung der Bewegung der Dachbürste 18 und der Seitenbürsten 22, 24 weist die Fahrzeugwaschanlage 10 eine Steuereinrichtung 30 auf. Die Steuereinrichtung 30 ist über ein Kabel 32 mit einem Eingabegerät 34 elektrisch verbunden. Das Eingabegerät 34 weist eine Tastatur 36 auf mit einer Vielzahl von Eingabetasten 38. Mittels der Eingabetasten 38 kann der Benutzer ein bestimmtes Waschprogramm auswählen und er kann die Bewegung der Dachbürste 18 und der Seitenbürsten 22, 24 manuell steuern.

Die Steuereinrichtung 30 umfasst ein erstes Datenlese- und Datenschreibgerät 40, das in der dargestellten Ausführungsform einen Einführschacht 42 aufweist, in den ein tragbares Speichermedium in Form einer Magnetkarte 44 eingeführt werden kann. Alternativ oder ergänzend kann die Steuereinrichtung ein zweites Datenlese- und -schreibgerät 41 aufweisen, das in der Zeichnung gestrichelt dargestellt ist und das mit einem im Fahrzeug 12 positionierbaren Speichermedium in Form eines Transponders 43 über eine Funkverbindung 45 kommuniziert. Der Transponder 43 ist in der Zeichnung ebenfalls gestrichelt dargestellt.

Die Steuerung der Bewegung der Dachbürste 18 und der Seitenbürsten 22, 24 entlang des Fahrzeuges 12 erfolgt wahlweise manuell mittels der Eingabetasten 38 oder aber automatisch durch eine selbsttätige Erfassung der Kontur des Fahrzeuges 12 mit Hilfe von Sensoren. Die Konturerfassung erfolgt im dargestellten Ausführungsbeispiel in an sich bekannter Weise dadurch, dass der Motorstrom der Elektromotoren 23, 25 der Dachbürste 18 und der Seitenbürsten 22, 24 zusammen mit deren Position relativ zu einer horizontalen bzw. vertikalen Bezugsebene erfasst wird. Derartige Konturerfassungsverfahren sind dem Fachmann an sich bekannt und bedürfen daher vorliegend keiner näheren Erläuterung.

Soll das Fahrzeug 12 ein erstes Mal mittels der Fahrzeugwaschanlage 10 gereinigt werden, so können die Dachbürsten 18 und die Seitenbürsten 22, 24 in Abhängigkeit von der Kontur des Fahrzeuges 12 selbsttätig am Fahrzeug entlang bewegt werden. Der Benutzer hat aber die Möglichkeit, zumindest in Teilbereichen des Fahrzeuges die Bewegung der Bürsten 18, 22, 24 manuell zu steuern. Dies wird nachfolgend am Beispiel der Dachbürste 18 näher erläutert.

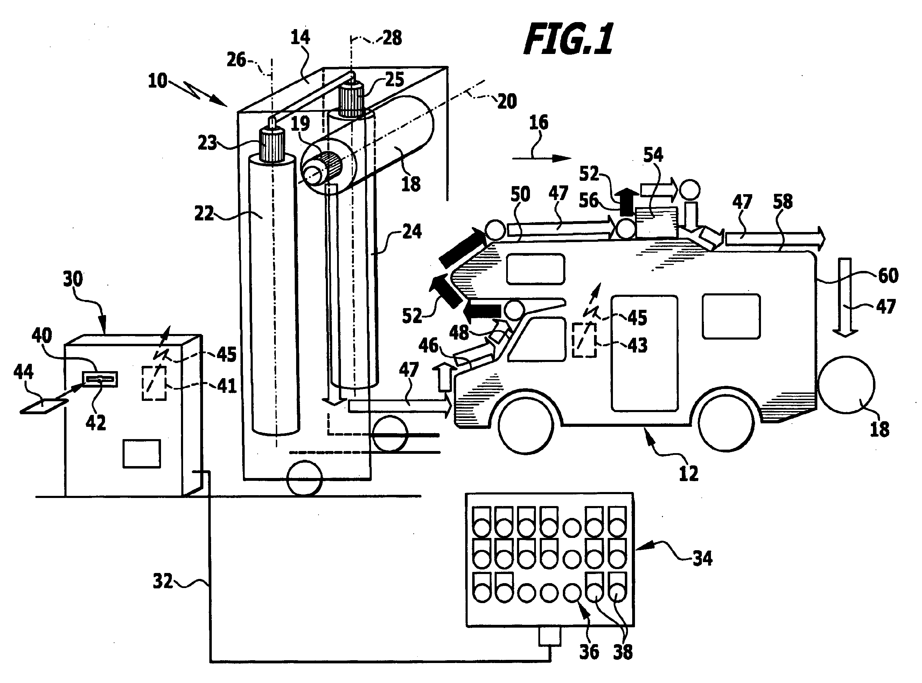

Ausgehend von einer in der Zeichnung dargestellten Parkstellung wird die Dachbürste selbsttätig in Richtung der hellen Doppelpfeile 47 zum vorderen Fahrzeugende verfahren. Anschließend beginnt die automatische Erfassung der Fahrzeugkontur, wobei im Bereich der Motorhaube 46 bis zum oberen Ende der Windschutzscheibe 48 des Fahrzeuges 12 die Bewegung der Dachbürste 18 während eines Referenzlaufes selbsttätig in Abhängigkeit von der Fahrzeugkontur erfolgt. In dem anschließenden Übergangsbereich zwischen der Windschutzscheibe 48 und dem vorderen Dachbereich 50 des Fahrzeuges 12 weist die Fahrzeugkontur einen komplizierten Verlauf auf. Dieser Übergangsbereich bildet einen manuellen Steuerungsbereich, in dem der Benutzer die Bewegung der Dachbürste 18 manuell steuert mit Hilfe der Eingabetasten 38. In Figur 1 ist dies durch die dunklen Doppelpfeile 52 veranschaulicht. Im vorderen Dachbereich 50 erfolgt dann die Bewegung der Dachbürste 18 wieder selbsttätig in Abhängigkeit von der in diesem Bereich geradlinigen Kontur des Fahrzeuges 12. In einem mittleren Dachbereich weist das Fahrzeug einen Aufbau 54 auf. Im Bereich der vorderen Stirnkante 56 des Aufbaus 54 steuert der Benutzer die Bewegung der Dachbürste 18 wieder manuell mit Hilfe der Eingabetasten 38, dieser Bereich bildet einen weiteren manuellen Steuerungsbereich. Im restlichen Bereich des Aufbaus 54 erfolgt dann die Bewegung der Dachbürste 18 ebenso wie im hinteren Dachbereich 58 und im Fahrzeugheck 60 selbsttätig in Abhängigkeit von der Fahrzeugkontur.

Die während des Referenzlaufes erfassten Konturdaten zumindest der manuellen Steuerungsbereiche des Fahrzeuges werden auf der Magnetkarte 44 und/oder auf dem Transponder 43 gespeichert und können zur Steuerung der Fahrzeugwaschanlage 10, insbesondere zur Steuerung der Bewegung der Dachbürste 18, während eines nachfolgenden Waschvorganges herangezogen werden. Bei einem späteren Waschvorgang muss daher der Benutzer die Dachbürste 18 nicht erneut teilweise manuell steuern.

In entsprechender Weise können auch die Seitenbürsten 22, 24 während eines Referenzlaufes teilweise selbsttätig in Abhängigkeit von der Fahrzeugkontur und teilweise manuell mit Hilfe der Eingabetasten 38 gesteuert werden und zumindest die Konturdaten der manuellen Steuerungsbereiche können auf der Magnetkarte 44 und/oder auf dem Transponder 43 gespeichert und zur Steuerung insbesondere der Bewegung der Seitenbürsten 22, 24 bei einem nachfolgenden Waschvorgang herangezogen werden.

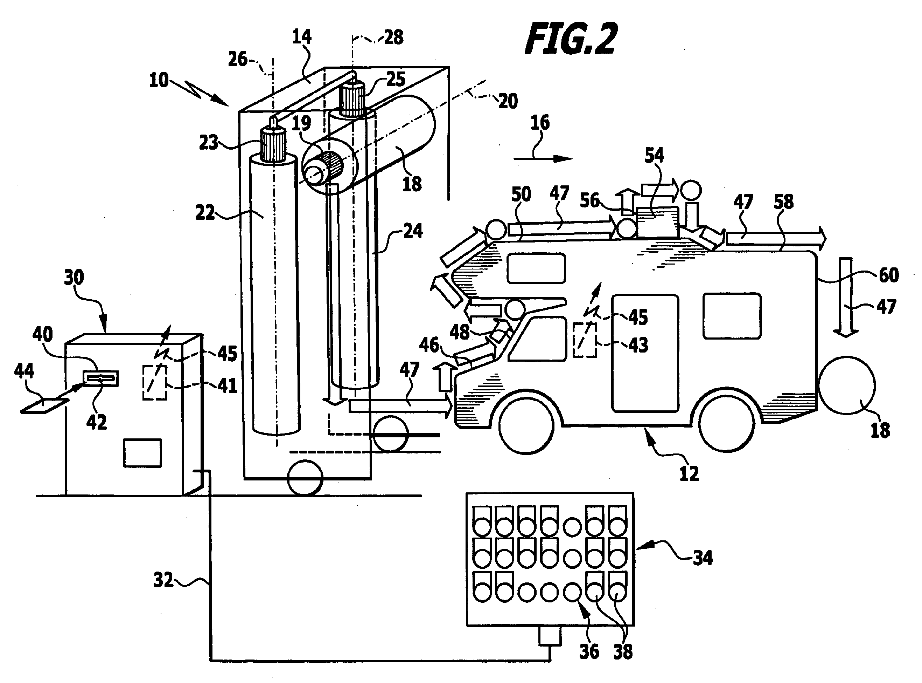

Der Benutzer kann die Magnetkarte 44 dem Datenlesegerät 40 entnehmen und mit dem Fahrzeug 12 mitführen. Wird das Fahrzeug 12 später erneut mittels der Fahrzeugwaschanlage 10 gewaschen, so kann der Benutzer die Magnetkarte 44 wieder in den Einführschacht 42 des Datenlesegerätes 40 einführen. Die gespeicherten Daten können dann ausgelesen und zur Steuerung der Dachbürste 18 und der Seitenbürsten 22, 24 herangezogen werden. Dies ist in Figur 2 dargestellt.

Während eines ersten Waschvorganges kann der Benutzer am Eingabegerät 34 ein gewünschtes Waschprogramm auswählen und er hat auch die Möglichkeit, die Geschwindigkeit der Dachbürste 18 sowie der Seitenbürsten 22, 24 in Abhängigkeit von deren Stellung relativ zum Fahrzeug 12 vorzugeben. Auch kann er vorgeben, dass einzelne Fahrzeugbereiche von der Dachbürste 18 bzw. von den Seitenbürsten 22, 24 mehrfach oder gar nicht überfahren werden. Darüber hinaus hat der Benutzer die Möglichkeit, den Anpressdruck der Dachbürste 18 und der Seitenbürsten 22, 24 vorzugeben. Alle diese reinigungsspezifischen Daten werden auf der Magnetkarte 44 und/oder dem Transponder 43 gespeichert und stehen zur Steuerung der Fahrzeugwaschanlage 10 bei einem nachfolgenden Waschvorgang zur Verfügung. Der nachfolgende Waschvorgang kann daher innerhalb sehr kurzer Zeit mit optimaler Anpassung an das zu reinigende Fahrzeug 12 durchgeführt werden, ohne dass hierzu der Benutzer erneut manuell in die Steuerung der Fahrzeugwaschanlage 10 eingreifen muss.

## Patentansprüche

1. Verfahren zum Waschen eines Fahrzeugs (12) mit Hilfe einer Fahrzeugwaschanlage (10), wobei mindestens ein Waschwerkzeug (18, 22, 24) in Abhängigkeit von der Kontur des Fahrzeugs (12) entlang des Fahrzeugs (12) bewegt wird, und man zumindest ein Waschwerkzeug (18, 22, 24) während eines Referenzlaufes entlang des Fahrzeugs (12) bewegt, wobei man die Bewegung des Waschwerkzeuges (18, 22, 24) zumindest entlang eines Teilbereiches des Fahrzeugs (12) manuell steuert, **dadurch gekennzeichnet, dass** man die Kontur zumindest des Fahrzeugsbereiches, in dem die Steuerung der Bewegung des Waschwerkzeuges (18, 22, 24) manuell erfolgt, in Form von Konturdaten auf einem Speichermedium (44) speichert, und dass man bei einem späteren Waschvorgang die gespeicherten Konturdaten zur Steuerung derselben Fahrzeugwaschanlage (10) oder einer baugleichen Fahrzeugwaschanlage heranzieht.

2. Verfahren nach Anspruch 1, **dadurch gekennzeichnet, dass** man die Kontur des gesamten Fahrzeugs (12) auf dem Speichermedium (44) speichert und bei einem späteren Waschvorgang zur Steuerung derselben Fahrzeugwaschanlage (10) oder einer baugleichen Fahrzeugwaschanlage heranzieht.

3. Verfahren nach Anspruch 1 oder 2, **dadurch gekennzeichnet, dass** man während des Referenzlaufes die Bewegung des Waschwerkzeuges (18, 22, 24) nur in einem Teilbereich des Fahrzeugs (12) manuell steuert.

4. Verfahren nach Anspruch 1 oder 2, **dadurch gekennzeichnet, dass** man während des Referenzlaufes die Bewegung des Waschwerkzeuges (18, 22, 24) entlang des gesamten Fahrzeugs manuell steuert.

5. Verfahren nach einem der voranstehenden Ansprüche, **dadurch gekennzeichnet, dass** man die Konturdaten auf einem tragbaren Speichermedium (44) speichert.

6. Verfahren nach einem der voranstehenden Ansprüche, **dadurch gekennzeichnet, dass** man die gespeicherten Konturdaten mittels eines Identifikationscodes eindeutig dem Fahrzeug (12) mit der gespeicherten Kontur oder einer Klasse von Fahrzeugen mit der gespeicherten Kontur zuordnet.

7. Verfahren nach einem der voranstehenden Ansprüche, **dadurch gekennzeichnet, dass** man den Referenzlauf vor einem Waschvorgang durchführt.

8. Verfahren nach einem der Ansprüche 1 bis 6, **dadurch gekennzeichnet, dass** man den Referenzlauf während eines Waschvorganges durchführt.

9. Verfahren nach einem der voranstehenden Ansprüche, **dadurch gekennzeichnet, dass** man reinigungsspezifische Daten mindestens eines Waschwerkzeuges (18, 22, 24) auf dem Speichermedium (44) speichert, und dass man bei einem späteren Waschvorgang die gespeicherten reinigungsspezifischen Daten zur Steuerung derselben Fahrzeugwaschanlage (10) oder einer baugleichen Fahrzeugwaschanlage heranzieht.

10. Verfahren nach einem der voranstehenden Ansprüche, **dadurch gekennzeichnet, dass** man eine Geschwindigkeit erfasst, die mindestens ein Waschwerkzeug (18, 22, 24) relativ zum Fahrzeug aufweist, und dass man die erfasste Geschwindigkeit auf dem Speichermedium (44) speichert, und dass man bei einem späteren Waschvorgang die gespeicherte Geschwindigkeit zur Steuerung derselben Fahrzeugwaschanlage (10) oder einer baugleichen Fahrzeugwaschanlage heranzieht.

11. Fahrzeugwaschanlage zur Durchführung des Verfahrens nach einem der voranstehenden Ansprüche, mit mindestens einem Waschwerkzeug (18, 22, 24), das in Abhängigkeit von der Kontur des Fahrzeugs (12) entlang des Fahrzeugs (12) bewegbar ist, wobei mindestens ein Waschwerkzeug (18, 22, 24) während eines Referenzlaufes entlang des Fahrzeugs (12) bewegbar ist, wobei die Bewegung des Waschwerkzeuges (18, 22, 24) zumindest entlang eines Teilbereiches des Fahrzeugs (12) manuell steuerbar ist, **dadurch gekennzeichnet, dass** die Kontur zumindest des Fahrzeugsbereichs, in dem die Steuerung der Bewegung des Waschwerkzeuges (18, 22, 24) manuell erfolgt, in Form von Konturdaten auf einem Speichermedium (44) speicherbar und zur Steuerung der Fahrzeugswaschanlage (10) vor oder während eines späteren Waschvorgangs auslesbar ist.

12. Fahrzeugwaschanlage nach Anspruch 11, **dadurch gekennzeichnet, dass** die Kontur des gesamten Fahrzeugs (12) auf dem Speichermedium (44) speicherbar und zur Steuerung der Fahrzeugwaschanlage (10) vor oder während eines späteren Waschvorganges auslesbar ist.

13. Fahrzeugwaschanlage nach Anspruch 11 oder 12, **dadurch gekennzeichnet, dass** die gespeicherten Konturdaten mittels eines Identifikationscodes eindeutig dem Fahrzeug (12) mit der gespeicherten Kontur oder einer Klasse von Fahrzeugen mit der gespeicherten Kontur zuordnenbar sind.

14. Fahrzeugwaschanlage nach Anspruch 11, 12 oder 13, **dadurch gekennzeichnet, dass** das Speichermedium (44) tragbar ist.

15. Fahrzeugwaschanlage nach Anspruch 14, **dadurch gekennzeichnet, dass** die Fahrzeugwaschanlage ein Datenlesegerät zum berührungslosen Auslesen des Speichermediums (44) aufweist.

16. Fahrzeugwaschanlage nach einem der Ansprüche 11 bis 15, **dadurch gekennzeichnet, dass** die Fahrzeugwaschanlage (10) Sensoren zur Erfassung reinigungsspezifischer Daten von mindestens einem Waschwerkzeug (18, 22, 24) aufweist, wobei die Daten auf dem Speichermedium (44) speicherbar und zur Steuerung der Fahrzeugwaschanlage (10) auslesbar sind.

17. Fahrzeugwaschanlage nach einem der Ansprüche 11 bis 16, **dadurch gekennzeichnet, dass** die Fahrzeugwaschanlage als Portalwaschanlage (10) ausgestaltet ist.

## Claims

1. Method for washing a vehicle (12) by means of a vehicle wash facility (10), wherein at least one wash tool (18, 22, 24) is moved along the vehicle (12) in dependence upon the contour of the vehicle (12), and at least one wash tool (18, 22, 24) is moved along the vehicle (12) during a reference run, the movement of the wash tool (18, 22, 24) being controlled manually along at least a partial area of the vehicle (12), **characterized in that** the contour of at least the vehicle area in which the movement of the wash tool (18, 22, 24) is controlled manually is stored in the form of contour data on a storage medium (44), and **in that** the stored contour data are used in a subsequent washing operation for controlling the same vehicle wash facility (10) or a vehicle wash facility of identical construction.

2. Method in accordance with claim 1, **characterized in that** the contour of the entire vehicle (12) is stored on the storage medium (44) and used in a subsequent washing operation for controlling the same vehicle wash facility (10) or a vehicle wash facility of identical construction.

3. Method in accordance with claim 1 or 2, **characterized in that** during the reference run, the movement of the wash tool (18, 22, 24) is controlled manually only in a partial area of the vehicle (12).

4. Method in accordance with claim 1 or 2, **characterized in that** during the reference run, the movement of the wash tool (18, 22, 24) is controlled manually along the entire vehicle.

5. Method in accordance with any one of the preceding claims, **characterized in that** the contour data are stored on a portable storage medium (44).

6. Method in accordance with any one of the preceding claims, **characterized in that** the stored contour data are uniquely assigned by means of an identification code to the vehicle (12) with the stored contour or to a class of vehicles with the stored contour.

7. Method in accordance with any one of the preceding claims, **characterized in that** the reference run is carried out before a washing operation.

8. Method in accordance with any one of claims 1 to 6, **characterized in that** the reference run is carried out during a washing operation.

9. Method in accordance with any one of the preceding claims, **characterized in that** specific data of at least one wash tool (18, 22, 24) relating to the cleaning are stored on the storage medium (44), and **in that** the stored specific data relating to the cleaning are used in a subsequent washing operation for controlling the same vehicle wash facility (10) or a vehicle wash facility of identical construction.

10. Method in accordance with any one of the preceding claims, **characterized in that** a speed of at least one wash tool (18, 22, 24) relative to the vehicle is detected, and **in that** the detected speed is stored on the storage medium (44), and **in that** the stored speed is used in a subsequent washing operation for controlling the same vehicle wash facility (10) or a vehicle wash facility of identical construction.

11. Vehicle wash facility for carrying out the method in accordance with any one of the preceding claims, with at least one wash tool (18, 22, 24) which is movable along the vehicle (12) in dependence upon the contour of the vehicle (12), at least one wash tool (18, 22, 24) being movable along the vehicle (12) during a reference run, the movement of the wash tool (18, 22, 24) being manually controllable along at least a partial area of the vehicle (12), **characterized in that** the contour of at least the vehicle area in which the movement of the wash tool (18, 22, 24) is controlled manually can be stored in the form of contour data on a storage medium (44) and read before or during a subsequent washing operation for controlling the vehicle wash facility (10).

12. Vehicle wash facility in accordance with claim 11, **characterized in that** the contour of the entire vehicle (12) can be stored on the storage medium (44) and read before or during a subsequent washing operation for controlling the vehicle wash facility (10).

13. Vehicle wash facility in accordance with claim 11 or 12, **characterized in that** the stored contour data are clearly assignable by means of an identification code to the vehicle (12) with the stored contour or to a class of vehicles with the stored contour.

14. Vehicle wash facility in accordance with claim 11, 12 or 13, **characterized in that** the storage medium (44) is portable.

15. Vehicle wash facility in accordance with claim 14, **characterized in that** the vehicle wash facility has a data reading device for touchless reading of the storage medium (44).

16. Vehicle wash facility in accordance with any one of claims 11 to 15, **characterized in that** the vehicle wash facility (10) has sensors for detecting specific data of at least one wash tool (18, 22, 24) relating to the cleaning, the data being storable on the storage medium (44) and readable for controlling the vehicle wash facility (10).

17. Vehicle wash facility in accordance with any one of claims 11 to 16, **characterized in that** the vehicle wash facility is configured as a gantry wash facility (10).

## Revendications

1. Procédé de lavage d'un véhicule (12) à l'aide d'une installation de lavage de véhicule (10), au moins un outil de lavage (18, 22, 24) étant déplacé en fonction du contour du véhicule (12) le long du véhicule (12), et on déplace au moins un outil de lavage (18, 22, 24) pendant une course de référence le long du véhicule (12), le déplacement de l'outil de lavage (18, 22, 24) au moins le long d'une zone partielle du véhicule (12) étant commandé manuellement, **caractérisé en ce qu'**on mémorise le contour d'au moins la zone du véhicule dans laquelle la commande du déplacement de l'outil de lavage (18, 22, 24) s'effectue manuellement sous forme de données de contour sur un support de mémoire (44) et **en ce que**, pour une opération de lavage suivante, on utilise les données de contour mémorisées pour commander la même installation de lavage de véhicule (10) ou une installation de lavage de véhicule de même fabrication.

2. Procédé selon la revendication 1, **caractérisé en ce qu'**on mémorise le contour de l'ensemble du véhicule (12) sur le support de mémoire (44) et, pour une opération de lavage suivante, on utilise ces données pour commander la même installation de lavage de véhicule (10) ou une installation de lavage de véhicule de même fabrication.

3. Procédé selon la revendication 1 ou 2, **caractérisé en ce que** pendant la course de référence, on commande manuellement le déplacement de l'outil de lavage (18, 22, 24) uniquement dans une zone partielle du véhicule (12).

4. Procédé selon la revendication 1 ou 2, **caractérisé en ce que**, pendant la course de référence, on commande manuellement le déplacement de l'outil de lavage (18, 22, 24) le long de l'ensemble du véhicule.

5. Procédé selon l'une quelconque des revendications précédentes, **caractérisé en ce qu'**on mémorise les données de contour sur un support de mémoire portatif (44).

6. Procédé selon l'une quelconque des revendications précédentes, **caractérisé en ce qu'**au moyen d'un code d'identification, on associe clairement les données de contour mémorisées au véhicule (12) présentant le contour mémorisé ou à une catégorie de véhicules présentant le contour mémorisé.

7. Procédé selon l'une quelconque des revendications précédentes, **caractérisé en ce qu'**on met en oeuvre la course de référence avant une opération de lavage.

8. Procédé selon l'une quelconque des revendications 1 à 6, **caractérisé en ce qu'**on met en oeuvre la course de référence pendant une opération de lavage.

9. Procédé selon l'une quelconque des revendications précédentes, **caractérisé en ce qu'**on mémorise des données spécifiques au nettoyage au moins d'un outil de lavage (18, 22, 24) sur le support de mémoire (44), et **en ce que**, pour une opération de lavage suivante, on utilise les données spécifiques au nettoyage mémorisées pour commander la même installation de lavage de véhicule (10) ou une installation de lavage de véhicule de même fabrication.

10. Procédé selon l'une quelconque des revendications précédentes, **caractérisé en ce qu'**on détecte une vitesse qu'au moins un outil de lavage (18, 22, 24) présente par rapport au véhicule, et **en ce qu'**on mémorise la vitesse détectée sur le support de mémoire (44), et **en ce que**, pour une opération de lavage suivante, on utilise la vitesse mémorisée pour commander la même installation de lavage de véhicule (10) ou une installation de lavage de véhicule de même fabrication.

11. Installation de lavage de véhicule permettant de mettre en oeuvre le procédé selon l'une quelconque des revendications précédentes, comprenant au moins un outil de lavage (18, 22, 24) qui peut être déplacé en fonction du contour du véhicule (12) le long du véhicule (12), dans lequel au moins un outil de lavage (18, 22, 24) peut être déplacé pendant une course de référence le long du véhicule (12), le déplacement de l'outil de lavage (18, 22, 24) pouvant être commandé manuellement au moins le long d'une zone partielle du véhicule (12), **caractérisé en ce que** le contour au moins de la zone du véhicule dans laquelle la commande du déplacement de l'outil de lavage (18, 22, 24) s'effectue manuellement peut être mémorisé sous forme de données de contour sur un support de mémoire (44) et peut être lu pour commander l'installation de lavage de véhicule (10) avant ou pendant une opération de lavage suivante.

12. Installation de lavage de véhicule selon la revendication 11, **caractérisée en ce que** le contour de l'ensemble du véhicule (12) peut être mémorisé sur le support de mémoire (44) et peut être lu pour commander l'installation de lavage de véhicule (10) avant ou pendant une opération de lavage suivante.

13. Installation de lavage de véhicule selon la revendication 11 ou 12, **caractérisée en ce que** les données de contour mémorisées peuvent être associées clairement au moyen d'un code d'identification au véhicule (12) présentant le contour mémorisé ou à une catégorie de véhicules présentant le contour mémorisé.

14. Installation de lavage de véhicule selon la revendication 11, 12 ou 13, **caractérisée en ce que** le support de mémoire (44) est portatif.

15. Installation de lavage de véhicule selon la revendication 14, **caractérisée en ce que** l'installation de lavage de véhicule comprend un appareil de lecture de données destiné à la lecture sans contact du support de mémoire (44).

16. Installation de lavage de véhicule selon l'une quelconque des revendications 11 à 15, **caractérisée en ce que** l'installation de lavage de véhicule (10) comprend des capteurs destinés à détecter des données spécifiques au nettoyage d'au moins un outil de lavage (18, 22, 24), les données pouvant être mémorisées sur le support de mémoire (44) et pouvant être lues pour commander l'installation de lavage de véhicule (10).

17. Installation de lavage de véhicule selon l'une quelconque des revendications 11 à 16, **caractérisée en ce que** l'installation de lavage de véhicule est conçue comme une installation de lavage à portique (10).
